# EUROPEAN PATENT SPECIFICATION

(11) **EP 1 528 807 B1**
(45) Date of publication and mention of the grant of the patent: **09.12.2009**
(21) Application number: 04105232.5
(22) Date of filing: 21.10.2004
(51) Int. Cl.: H04N 7/088

(54) **Information service provision**
Bereitstellung eines Informationsdienstes
Prestation de service d'informations

(30) Priority: 30.10.2003 GB 0325406
(43) Date of publication of application: 04.05.2005
(73) Proprietor: Nokia Corporation, 02150 Espoo (FI)
(72) Inventor: Hiltunen, Reino Juhani, 21160 Merimasku (FI)
(74) Representative: Swindell & Pearson

(56) References cited:
- EP-A- 0 874 486
- WO-A-01/37465
- WO-A-99/34599
- US-A1- 2001 053 700
- US-B1- 6 239 844

## Description

This invention relates to the provision of information services associated with a television transmission, particularly but not exclusively to a method of personalising a teletext service.

The provision of text based information services, for example teletext, for viewing on a conventional television receiver, is well-known. The BBC's Ceefax™ service and ITV's Teletext™ service are examples of commercial versions of analogue teletext services. Teletext is a data format that enables data to be transmitted within a video signal. Commonly, analogue teletext data is encoded in unused parts of the video signal, for example in the vertical blanking interval. Teletext data can also be transmitted over a dedicated channel, if this is available, for example in a cable or satellite television system.

Commercial digital teletext services are also available, including the Super Teletext™ service. Some of the current digital teletext services are based on the Multimedia Home Platform (MHP). In general terms, data is stored in a data carousel and transmitted cyclically as transport streams together with other content streams. Digital teletext services are not limited to serving up text and digital content may include pictures, graphics, video and voice clips.

In a conventional television system having a teletext facility, a viewer switches between the television and teletext modes using, for example, a 'TEXT' button on a remote control unit. In the teletext mode, a viewer selects a page that he wishes to view by entering the page number on the remote control unit. Page numbers are defined in the teletext standard as a 3-digit number in the range 100 to 899, consisting of one 'magazine' digit plus two page number digits. In digital systems, it is possible to select services and topics by using a cursor, in addition to, or as an alternative to, the use of page numbers.

Teletext enables a wide variety of information to be available to users in a simple text format. Broadcast teletext pages may contain information such as the latest news, sports results, financial information, television programme listings, and other information that may be of interest to users. Conventionally, pages provided by a certain teletext provider will be interlinked, such that a user may navigate their way through the pages until their desired information is found. For example, a first teletext page relating to certain information may display the page numbers for subsequent pages of similar information. A user may then navigate to the subsequent pages by entering their page numbers, and be presented with further links to more such pages.

A limited number of 'quick-links' to further pages are also available. Each teletext page may normally contain four such quick-links, each being represented by a different colour. Quick-links are normally selected by the user by pressing one of four coloured buttons on a remote control device, each of the coloured buttons corresponding to one of the available quick-links. A page number associated with the quick-link is then automatically entered and the associated page is displayed to the user.

A drawback to conventional teletext receivers is that it can be difficult and time-consuming for a user to navigate the teletext pages to find the information he desires. This is because pages can be slow to update following the entry of a new page number, even when this is done using a quick-link as described above, and even when updated, there is no guarantee that the page will contain the desired information. Should a user wish to view specific information, it is therefore much faster if the user knows in advance the precise 3-digit page number where the information is displayed, and enters this directly. In cases where a user regularly views multiple teletext pages, however, it can become complicated for them to memorise each of the respective page numbers. They will therefore have to resort to navigating the pages to find the desired information each time.

For example, a particular user may like to check the latest match results of the football team that he supports, as well as the latest sports news and the current selling price of a selection of six different company shares. This may involve information displayed on up to eight different teletext pages, the numbers of which, for quick access to the pages, would need to be known and typed individually into the remote control. This can become complicated and tedious for the user.

A further disadvantage of conventional teletext receivers is that a user may go through the process of navigating to a page of interest, only to find that it has not been updated since the last time they viewed it. Pages containing the latest news and other such changing information, are updated regularly, but are of no interest if the information is already known, or has become stale. It may also be that a teletext page would only be of interest to a user if it contained a particular - update, such as the score of a particular tennis match. Even if updated, the page may not yet contain the desired information and the user will have wasted time in needlessly accessing the page.

US 6,239,844 discloses a television receiver capable of decoding teletext pages. The television receiver may be arranged to scan through available channels in order to continuously acquire and store a user's favourite teletext pages.

EP-A-0 874 486 discloses a method of providing program schedule data to a television, on request by a user. Individual user preferences, including, for example, certain type of programs, broadcast dates and performers in which the user is interested, may be stored centrally and the type and degree of detail of program schedule data to be transmitted is selected in dependence on individual user preferences.

WO 01/37465 discloses a method of selecting, storing and delivering audio/data/visual information according to user preferences of a viewer. The viewer may be informed of content that was recorded while the viewer is watching television.

It is feasible that in the future users will have access to teletext pages via wireless devices. An example of a system offering such a service is described in WO 01 /43433. In this system, teletext pages are formatted according to eXtensible Markup Language (XML) specifications and sent to a mobile device for display to a user. The problems described above relating to conventional teletext receivers also apply to such mobile devices, and are particularly important when other factors such as limited battery life require users to minimise the time they spend using a wireless teletext service.

The current invention seeks to address the above problems.

According to a first aspect of the invention there is provided a method comprising creating a personal content profile for an information service associated with a television transmission, the information service providing content to a receiver comprising a buffer memory and a content memory, the profile comprising instructions for defining a subset of the content, the instructions comprising at least one of a keyword and metadata associated with the content of the information to be contained in the subset; storing the personal content profile, receiving content from the service into the buffer memory; processing the received content according to the stored profile; retrieving content from the buffer memory corresponding to information specified in the profile; comparing the retrieved content with data stored in the content memory to determine whether the content has been updated; and generating alerts to alert a user that updated content exists.

By personalising content in accordance with a predefined profile, a user is able to access preferred content much more quickly and easily than is the case for a conventional text based service such as teletext.

The step of processing the received content can comprise filtering the content to extract the defined subset of the content. The filtering can be done by any item of metadata information, for example by page number, by keyword or by a combination of the two. Metadata information may comprise the page number, any code for a page, topic information, size information, keywords describing the content of a document, the document title, author, people identified in a document, information relating to graphics, pictures, video or audio clips and so on.

User access can be controlled by identifying each user. This allows multiple users to have their own personal profiles. In addition, each user can have many different profiles.

The method may also comprise storing updated pages in the content memory. By only storing updated pages relating to preferred topics of interest, as defined in the personal content profile, memory resources can be optimised.

The alerts may, for example, be generated on the basis of information stored in the personal content profile.

The profile may be created at the receiver or may be created at a wireless device remote from the receiver and then sent to the receiver. The personalised content may be sent to the wireless device.

According to the invention, there is also provided apparatus comprising a buffer memory; a content memory; means for creating a personal content profile for an information service associated with a television transmission, the profile comprising instructions for defining a subset of content provided by the information service, the instructions comprising at least one of a keyword and metadata associated with the content of the information to be contained in the subset; means for storing the personal content profile, means for receiving content from the service into the buffer memory; means for processing the received content according to the stored profile; means for comparing the contents of the buffer memory and the content memory to determine whether the content has been updated; and means for generating an alert to alert a user that updated content exists.

According to the invention, there is still further provided a wireless device comprising means for creating a user-specific personal content profile for an information service associated with a television transmission, the profile comprising instructions for defining a subset of the content provided by the information service, the instructions comprising at least one of a keyword and metadata associated with the content of the information to be contained in the subset; means for transmitting the profile to a receiver, the receiver being configured to receive content from the information service, to personalise the received content in accordance with the profile and to compare the contents of a buffer memory and a content memory to determine whether the content has been updated, the wireless device further comprising means for receiving the personalised content from the receiver, means for displaying the personalised content and means for displaying an alert to alert a user that updated content exists.

By transmitting content to a wireless device, a user has similar personalised content available in two different devices, for example enabling access both at home and out of the home.

For a better understanding of the invention, embodiments thereof will now be described, purely by way of example, with reference to the accompanying drawings, in which:
Figure 1 illustrates a teletext receiver according to the invention;
Figure 2 illustrates an example of a personal content profile according to the invention, as may be stored in the memory of the teletext receiver of Figure 1;
Figure 3 illustrates a method according to the invention, carried out by the teletext receiver of Figure 1, of creating personal content and user interface profiles and processing teletext content accordingly;
Figure 4 illustrates the procedure for filtering teletext content according to the invention;
Figure 5 illustrates the procedure for generating and displaying update alerts using the teletext receiver of Figure 1;
Figure 6 illustrates the procedure for displaying teletext content using the teletext receiver of Figure 1;
Figure 7 illustrates a wireless device according to the invention for receiving and displaying teletext content transmitted by a teletext receiver according to the invention;
Figure 8 illustrates an example of a personal content profile according to the invention, as may be stored in the teletext receiver or wireless device of Figure 7;
Figure 9 illustrates a method according to the invention of creating personal content and personal user interface profiles in the wireless device of figure 7 and the subsequent processing of teletext content;
Figure 10 illustrates the filtering of teletext content in the teletext receiver of Figure 7, for display by the teletext receiver and/or the wireless device of Figure 7;
Figure 11 illustrates the procedure for displaying update alerts using the wireless device of Figure 7; and
Figure 12 illustrates the procedure for displaying teletext content using the wireless device of Figure 7.

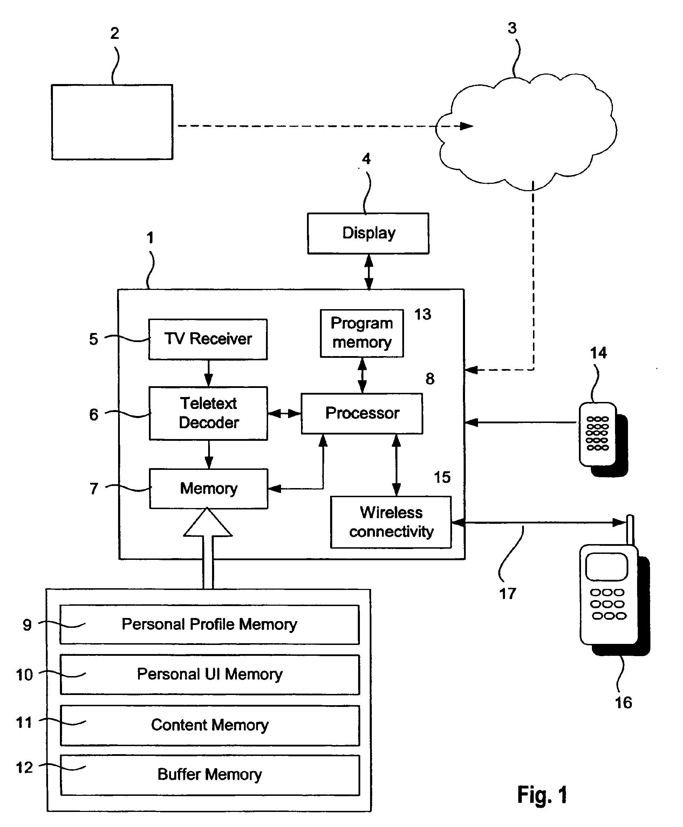

Referring to Figure 1, a teletext receiver 1, preferably a digital teletext receiver, according to the invention is illustrated. In this example, the teletext receiver 1 receives teletext signals broadcast from a television station 2, via a digital television network 3. This may be any form of network, including over-the-air, cable or satellite based networks, using the digital video broadcasting (DVB) standard or any other digital standards, including digital TV standards using IP datacasting (IPDC) time slicing technology. In alternative embodiments of the invention, other television networks may also be used, including analogue networks. The teletext receiver 1 is, for example, incorporated within a set-top box (STB) and teletext content is viewed on an attached television display 4. Alternatively, the teletext receiver 1 is a stand-alone device, or incorporated within other devices, such as a television set or other display device, a Personal Digital Recorder (PDR), a Personal Video Recorder (PVR), personal computer or any MHP capable device.

The teletext receiver 1 comprises a television (TV) receiver 5, a teletext decoder 6, memory 7 and a processor 8. The TV receiver 5 and/or the teletext decoder 6 may alternatively be located in devices external to the teletext receiver 1. In this example, the memory 7 is divided into four sections, namely personal profile memory 9, personal user interface (UI) memory 10, content memory 11, and buffer memory 12. There is a further separate program memory 13, which stores the software run by the processor 8 to implement a device and method according to the invention. The teletext receiver 1 is also operable to receive signals from a remote control device 14 and further includes a wireless connectivity module 15 for communicating with a wireless device 16 via a wireless communications network 17.

As will be described in substantially more detail below, the TV receiver 5 receives video signals containing teletext content broadcast over the television network 3. The signals are output to the teletext decoder 6, which extracts and decodes the teletext content from the video signal. As will be described in more detail below, the content is then stored in the buffer memory 12. The processor 8 filters the content in the buffer memory 12 according to a predetermined personal content profile stored in the personal profile memory 9. The resulting pages are compared with pages previously stored in the content memory 11, and should one have been updated, an alert is generated by the processor 8. The filtered content is then transferred to the content memory and the content is displayed to a user via the display 4.

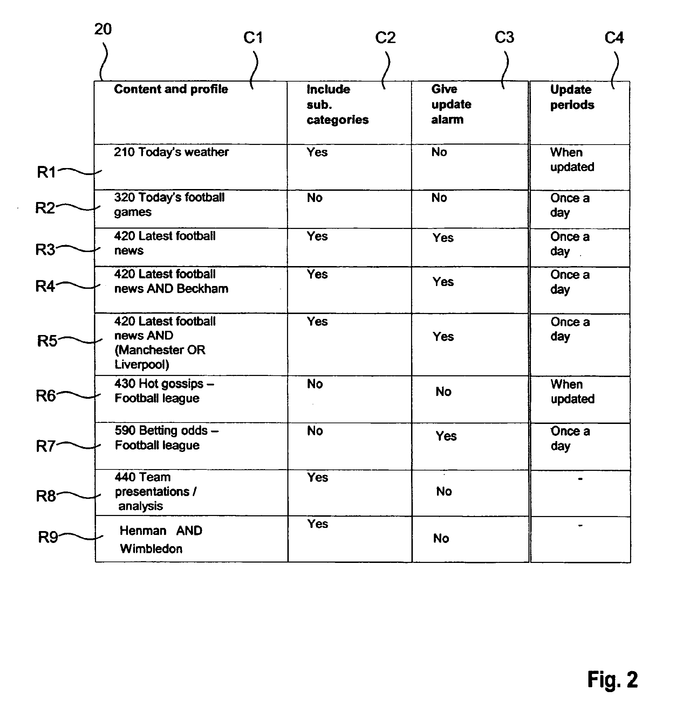

Figure 2 illustrates an example of a personal content profile 20 according to the invention, as may be stored in the personal profile memory 9 of Figure 1. Multiple personal profiles for one or more users may be stored in the personal profile memory 9.

The personal content profile 20 is a database of records R1 to R9 programmed by a user. Each record provides instructions to the processor 8 for filtering received teletext content and performing subsequent steps according to a user's preferences. Each record comprises a first field C1 containing the page number of interest along with keywords for a keyword search if required, or keywords alone without a page number. The page number may be any string including numbers or letters. Keywords may be combined using Boolean operators such as AND, OR, NOT and so on. For example, the first record R1 comprises the data "210 Today's Weather". This signifies that the page of interest is page number 210, and, to enable the user to remember what this page relates to when viewing the database 20, the text "Today's Weather" is given. No keyword is specified in this record R1. Other records, such as the fourth record R4 contain the data "420 Latest Football News AND Beckham". In this case, the page details are "420 Latest Football News", and the page will be searched for the keyword "Beckham". As a further example, record R9 provides just keywords with no page numbers. In this case, the keywords "Henman" AND "Wimbledon" are searched in all pages received at the teletext receiver 1. A user may also select topics or categories without using page numbers or keywords, by using metadata that the system supports and provides.

The second field C2 contains an indication as to whether page sub-categories should be included in the details provided in the first field C1. Sub-categories are, for example, page numbers linked to the specific page, including the pages linked to by quick-links, such as the four coloured buttons on conventional teletext pages. In the example shown, the first record R1 signifies that the sub categories should be included.

The third field C3 provides an indication as to whether the user should be alerted when the pages detailed in the first and second fields C1 and C2 are updated. The alert given may be a visual alert on the display 4, or on a display of the STB. There may also be an audio alert depending on a user's preference.

The fourth field C4 determines the frequency at which the processor 8 checks for page updates. Having the selection of "When Updated" signifies that the processor 8 will check for updated content every time teletext content is received by the receiver 1 and stored in the buffer memory 12. Alternatively, "Once a day" signifies that the receiver will only check the transmission for updated content once a day, at a time period that may be determined by the user. Other such time periods would also be available, including the option of setting a one-off update time, or a date after which updates are no longer required.

The operation of the teletext receiver 1 will now be described in more detail with reference to Figures 1 to 5.

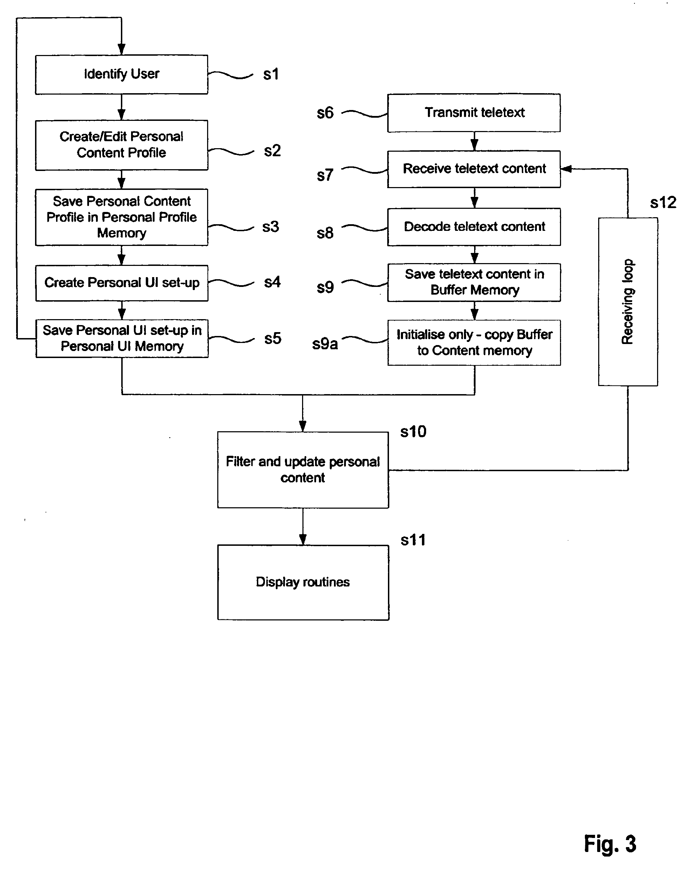

Figure 3 is a flow diagram illustrating the operation of the teletext receiver 1 of Figure 1, for personalising teletext content according to the present invention. The first step s1 to be carried out is the identification of a user accessing the receiver 1. This is required as different users may each store individual personal profiles in the personal profile memory 9, and a user must therefore be identified. For instance, a user may be identified using a personal identification number (PIN) and enters this using, for example, the remote control 14, to create or edit their personal profiles.

Once identified, the user can then create one or more personal content profile, or edit an existing profile, such as that 20 illustrated in Figure 2 (step s2). This may be done using the remote control 14, with the user following prompts on the display 4 until the required data is entered. Alternative data entry methods, such as a keypad available on the STB, would be apparent to the skilled person. Once created, the personal content profile is stored in the personal profile memory 9 (step s3).

Next, the user creates and saves a personal user interface (UI) set-up file in the personal UI memory 10 (steps s4 and s5). The personal UI set-up file is entered in a similar way to the personal content profile, the user responding to displayed prompts to make the relevant changes. The contents of the personal UI set-up file determine what the user will see on the display 4 when he selects the personal viewing mode. It comprises a list of pages that are to be displayed corresponding to the personal profile. Rather than storing page numbers, it may alternatively store titles of content/documents that are links to the actual content. In addition, it stores formatting information allowing the user to specify how the display is to be organised. For instance, font sizes and colours may be individualised by a user and the user may create personal 'look and feel' features. In accordance with the filtering and updating procedure described below, there is initially no need to set-up page numbers in the UI set-up as these will be provided automatically by the filtering and updating procedure. However, a user can set up default page numbers to be viewed if required. In an alternative example of the system, the personal UI set-up is generated automatically by the system.

Once one or more personal profiles and a personal UI set-up file have been created and stored, the teletext content can be processed according to these. The first step (step s6) in this process is the transmission of the text based information service by the broadcasting station 2. Typically, a television station repeatedly transmits a group of pages and updates them in between transmissions if necessary. The system is therefore not demand-based, but rather all of the information is transmitted and a user selects that which they would like to view.

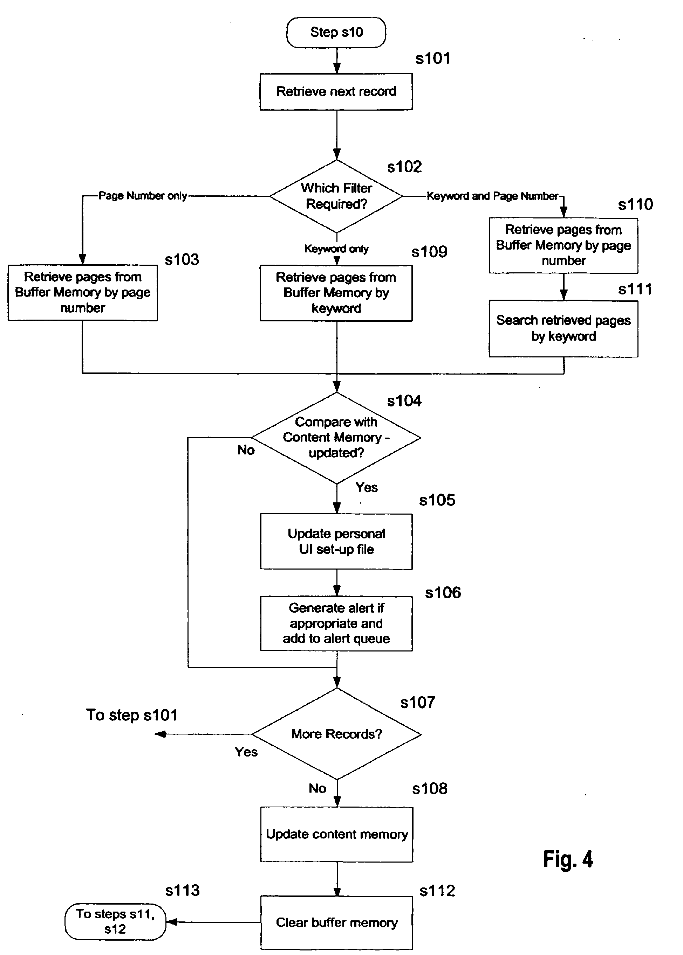

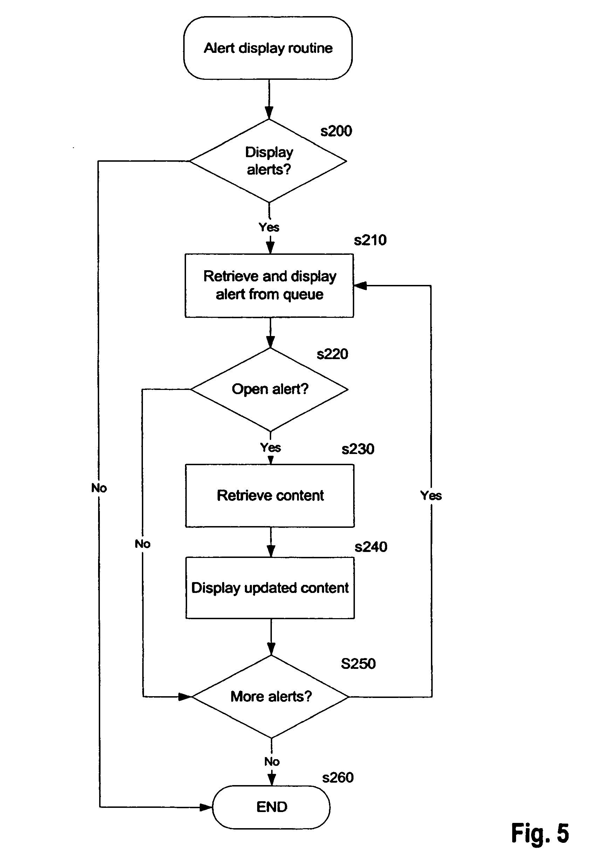

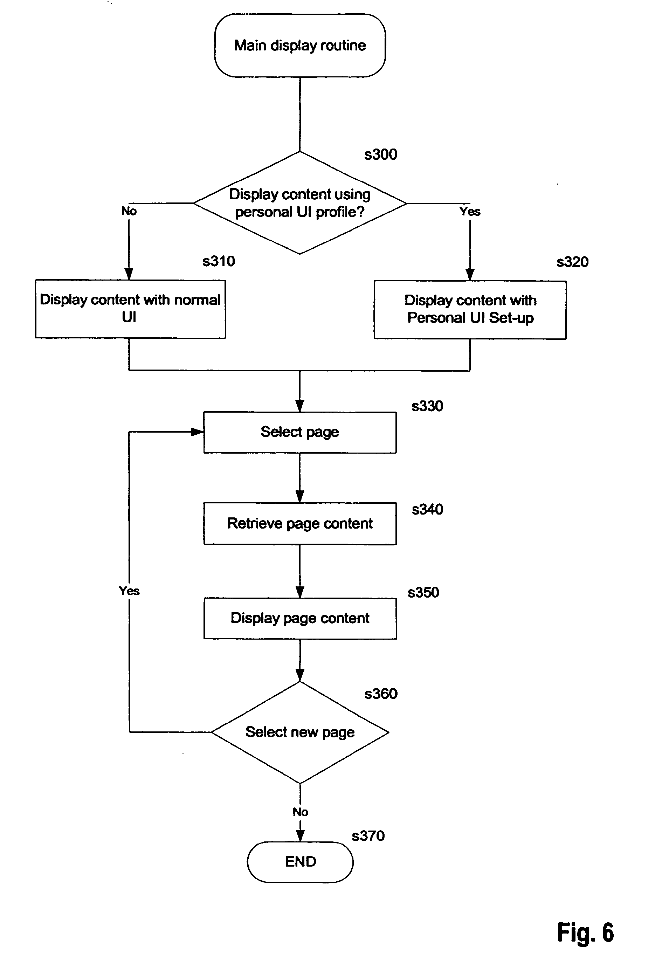

The teletext content is received at the TV receiver 5 (step s7) and decoded by the teletext decoder (step s8). The content is then saved in the buffer memory 12 (step s9). On initialisation the content memory is initially empty and is only filled as a result of the filtering process described below. In an alternative embodiment, as an initialisation step s9a, shown in dotted outline, the buffer memory 12 is copied to the content memory 11 in its entirety, for example when the system is switched on. The received content in the buffer memory 12 is then ready to be filtered according to the stored personal content profile(s) (step s10). This step may include the filtering of the received content, updating personal content according to the results of the filtering, alerting a user to new content and deleting the buffer memory. One example of the way in which this filtering can be achieved is explained in detail below with reference to Figure 4. Once updated, the content and any associated alerts are then displayed to the user (step s11), as shown in detail in Figures 5 and 6, while further teletext content is received and processed via a receiving loop (step s12).

Figure 4 illustrates the steps involved in filtering the received teletext content according to a user content profile 20 (step s10) according to the invention. Three examples are given, the first for filtering the content by page numbers alone (step s103), the second for filtering the content by keywords alone (as per record R9 of Figure 2) (step s109), and the third for filtering content by keywords and a page number (steps s110, s111). In an alternative embodiment of the invention, content may be retrieved from the buffer memory by metadata information or any combination of page number, metadata and keyword/topic name. Any information which is capable of separating items of content from each other may be used. Content may, for example, be tagged and structured using a markup language including any one or more of XHTML, XML, SGML, HTML and so on.

Each record in the personal content profile 20 is retrieved (step s101) and the information specified in field C1 of the profile 20 is used to determine which filter is required (step s102). Should filtering the content by page numbers alone be required, the content in the buffer memory 12 associated with the page number indicated in the particular record of the personal content profile 20 is selected (step s103). For example, the content for page 210 is selected for record R1 in the example profile 20. This content is then compared (step s104) to that previously received and stored in the content memory 11. If the comparison shows that the content has been updated, because the content is different, then the user's personal UI set-up file in the personal UI memory 10 is updated with the resulting page number (step s105). On initialisation of the system, when the UI set-up file does not include any pages, the updated page numbers are sent as new page numbers. Therefore, at the end of the first pass after setting up a new personal content profile, the personal UI set-up file will contain page numbers corresponding to the personal content profile. On subsequent passes, where a page number already exists in the personal UI set-up file, the fact that the page number has been updated may be flagged appropriately, for example by an update flag stored against the page number in the personal UI memory 10. The personal UI memory 10 may also store a time when the page was last updated. This can be used to trigger deletion of the page from the UI memory 10 if it has not been updated for some predetermined time.

As an example of the above functionality, assuming that the personal content profile 20 contains records R1, R4 and R9 only and that record R9 generates pages 510 and 610 during the filtering process, then the personal UI set-up file will initially contain pages 210, 420, 510 and 610. As mentioned above, the UI set-up file may alternatively or in addition store pages without page numbers by storing titles of the topics or content.

Finally, the processor 8 generates an alert for the update if appropriate, by checking whether the alert flag is set in field C3 of the user profile 20 (step s106). Each alert is added into an alert queue and includes the updated page number and/or title of the topic/content. The display of alerts to the user is handled by the alert display routine, which is shown in detail in Figure 5. The processor 8 then looks to process the next record in the personal content profile 20 (step s107). Where there are more records to process, control returns to step s101, otherwise the content memory is updated by copying the buffer memory to the content memory (step s108). The buffer memory may then optionally be cleared ready for the next round of data (step s112) and the filtering and updating procedure ends (step s113). If the comparison at step s104 shows that there has been no change in the selected content, the updating steps s105 and s106 are bypassed and control passes directly to step s107.

Where content is required to be filtered by keyword only, for example as in record R9 of the example profile 20, the pages received and stored in the buffer memory 12 are searched to find those including the keyword(s) indicated in the personal content profile 20 (step s109). These pages are then compared (step s104) with the corresponding pages previously stored in the content memory 11 and the operation proceeds as described above (steps s105 to s107). For the case of filtering content according to keywords and page numbers, the content is firstly reduced to the page number(s) referred to in the personal content profile 20 (step s110). The relevant pages are then filtered to find those including the keyword(s) indicated in the personal content profile 20 (step s111). As described above, the remaining content is then compared to that currently stored in the content memory 11 and the appropriate updating is performed (steps s104 to s107).

As mentioned above, when there are no more records to be processed (step s107), the buffer memory is copied to the content memory (step s108), the buffer memory is cleared (step s112) and the filtering/updating procedure ends (step s113), so that control returns to steps s11 and s12 shown in Figure 3. The updating of the content memory by copying across the entire contents of the buffer memory ensures that pages not marked for searching during the filtering process are updated, so that users can see the full content of the teletext service in the usual way.

In an alternative embodiment of the invention, where there is no requirement to update the content memory in full, the content memory can be selectively updated during examination of each record when a selected page is found to have been updated, for example by performing a content update between steps s104 and s105. There is then no need for a full content update at step s108.

The procedure for displaying any generated update alerts is illustrated in Figure 5.

Referring to Figure 5, first, it is determined whether or not the user has indicated alerts in general should occur (step s200). This is a setting that the user may use to disable all alerts if required. If alerts are enabled, the first alert in the alert queue is retrieved and displayed to the user (step s210). The user may then provide an instruction to view the updated content relating to that alert, via the remote control or other user input means (step s220). If the user does wish to see the content, the content corresponding to the page number in the alert is retrieved from the content memory 11 (step s230) and displayed (step s240). Otherwise or once the content is being displayed, the system determines whether any more alerts are queued (step s250). If so, control returns to step s210, otherwise the alert procedure terminates (step s260). In alternative embodiments, multiple alerts may be displayed concurrently, or stored for display once a previous alert has been viewed by the user.

Referring to Figure 6, when the user wishes to view teletext content, he is given the choice of displaying teletext using the standard teletext interface or using his personal user interface stored in the personal UI set-up file (step s300). Whichever option he chooses, the procedure for selecting and displaying pages is essentially the same, the only difference being the selection of pages available. In the standard display (step s310), all the standard broadcast pages are available, with the attendant difficulties of navigating between pages to find relevant content. For example, the first or index page of the particular teletext provider may be displayed, giving access to a substantial amount of information. By contrast, in the personal display (step s320), only those pages which fit the personal profile are available, so giving rise to a significant increase in navigation speed between pages of interest. As described above, the contents of the personal UI set-up file are the page numbers corresponding to the personal content profile 20 and resulting from the filtering and updating procedure illustrated in Figure 4. In either case, navigation of the teletext content may be performed by selecting a page (step s330), retrieving the resulting page content from the content memory 11 (step s340) and displaying it (step s350). The user can then either select a new page (step s360), in which case control returns to page selection (step s330) or exit the procedure (step s370).

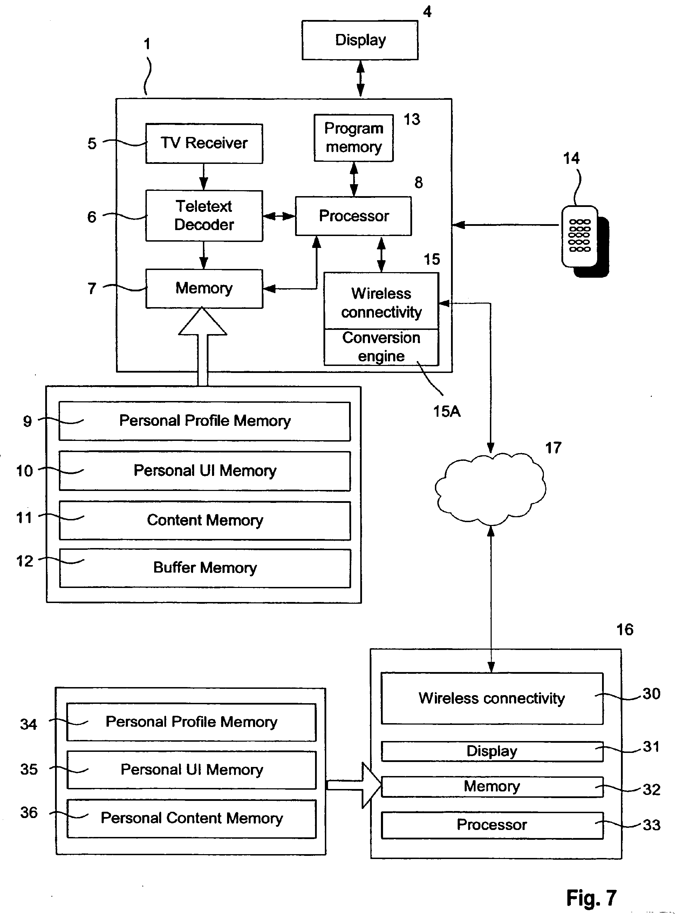

As was briefly mentioned above in relation to Figure 1, the teletext receiver 1 may be capable of communicating with a wireless device 16. In this case, the personal profile set-up can be done using the wireless device 16 and the wireless device can be used to view the resulting content. The detail of the circuitry and memory configuration at the wireless device 16 required to achieve this is illustrated in Figure 7.

Referring to Figure 7, the teletext receiver 1 has the same configuration as that shown in Figure 1, as indicated by the use of the same reference numbers in both Figures. It includes a first wireless connectivity module 15 for communicating with the wireless device 16 via a wireless communications network 17. The wireless device 16 correspondingly comprises a second wireless connectivity module 30, as well as a display 31, memory 32 and a processor 33. The first and second wireless connectivity modules in the teletext receiver 1 and the wireless device 16 are, for example, Bluetooth™ modules permitting the device 16 to communicate with the receiver 1 via the Bluetooth™ protocol. It would be apparent to a skilled person that any other form of long or short range wireless connectivity or protocol could be implemented instead, including Wi-Fi or IrDA, or the devices could communicate via a number of different protocols.

The wireless device 16 may have a special application to handle and represent received and stored teletext content like a TV/STB. In other embodiments, teletext content may be transmitted from the teletext receiver 1 to the device 16 in SMS, WAP, MMS or any other wireless message standard. In this case the teletext receiver 1 has a conversion engine 15A for converting teletext pages into a specific wireless message standard.

In some cases, it is better to transmit updates and content only via a Bluetooth connection. This is especially the case if the transmitted content is large and expensive for the user and/or if the update period is relatively infrequent, for example, once a day or once a week. This may happen automatically when the wireless device 16 enters within the range of a Bluetooth transmitter in the teletext receiver 1.

The memory 32 in the wireless device 16 is divided into three sections, namely wireless device personal profile memory 34, wireless device personal UI memory 35 and wireless device personal content memory 36, the wireless device prefix being used merely to differentiate from the similarly named memories at the teletext receiver 1.

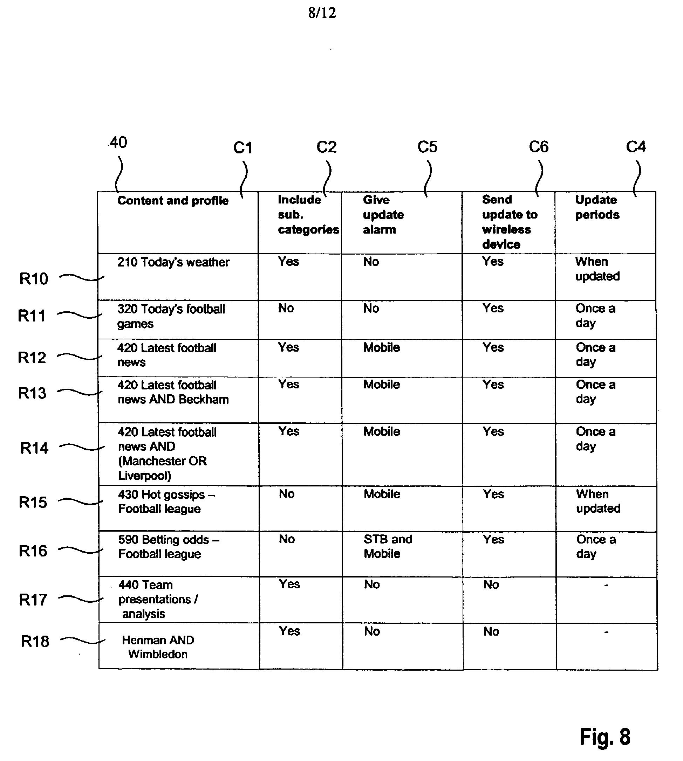

Figure 8 illustrates a personal profile 40 which can be seen to be a modified form of the personal profile 20 shown in Figure 2. The difference between this and the profile 20 shown in Figure 2 is shown in new fields C5 and C6. New field C5 is a modification of field C3 in Figure 2, in that the 'Give update alarm' column is not confined to a 'Yes/No' value, but in the event that an update alarm should be given, includes details of where that alarm should be sent, for example 'Mobile', 'STB' or 'STB and Mobile', indicating that the alarm should be sent to the wireless device 16 only, to the teletext receiver 1 only, or to both, respectively. New field C6 indicates whether the update should be sent to the wireless device 16.

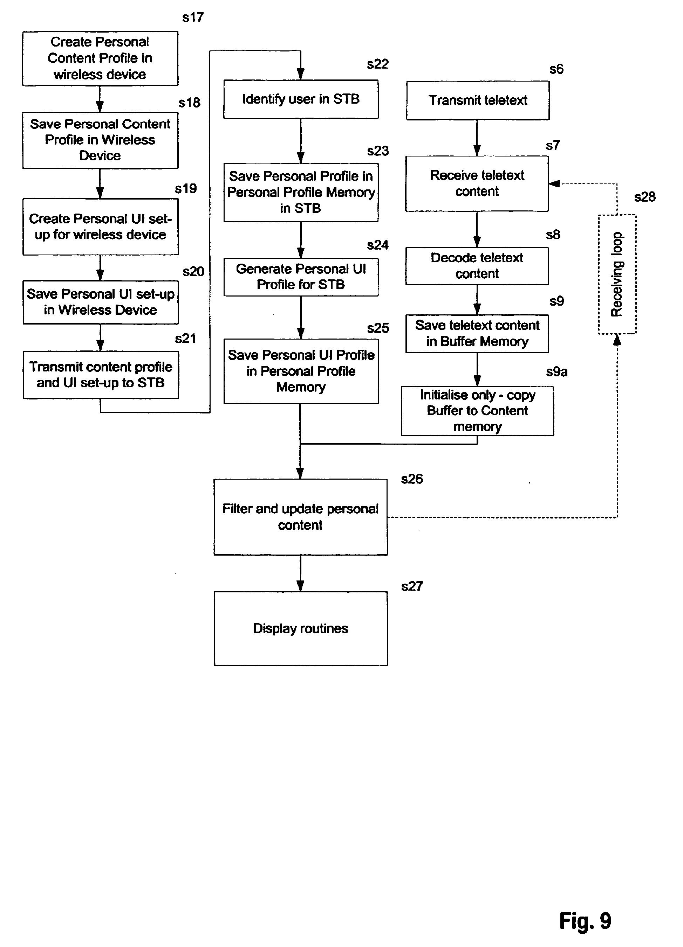

Figure 9 is a flow diagram illustrating the interaction of the wireless device 16 and teletext receiver 1 shown in Figure 7, for personalising teletext content according to the present invention. A user first creates or amends a personal content profile 40 at his or her wireless device 16 (step s17) and saves the profile (step s18) in the wireless device personal profile memory 34. He also creates and saves his personal UI set-up file in the wireless device personal UI memory 35 (steps s19 and s20). The procedure required to create and save the personal content profile 40 and UI set-up is entirely analogous to that described in relation to Figure 3, except that it is done at the wireless device 16 rather than at the teletext receiver 1. However, in the case of a wireless device with a relatively small screen, the user may wish to manipulate the amount of information displayed on the screen. The majority of teletext pages will be too large to be displayed legibly on a display screen, so scrolling may be enabled or pages may be displayed in individual portions, a new portion replacing the previous one at time intervals that may be specified in a user's personal UI set-up. Alternatively, this personal UI set-up file is generated automatically within the wireless device 16 taking account of parameters defining the device display 31.

The personal profile 40 and personal UI set-up file are then transmitted from the wireless device 16 to the teletext receiver 1 over the wireless connection between them (step s21).

At the teletext receiver 1, the user is identified (step s22), using, for example, Bluetooth™ authentication methods or a personal PIN code and the personal content profile is saved in the personal profile memory 9 at the receiver 1 (step s23). A personalised teletext UI set-up is then generated for the receiver 1 (step s24) based on that transmitted from the wireless device 16, but using the layout parameters that are appropriate for the receiver 1, for example the default display size. The generated UI set-up file is then saved in the personal UI memory 10 at the receiver 1.

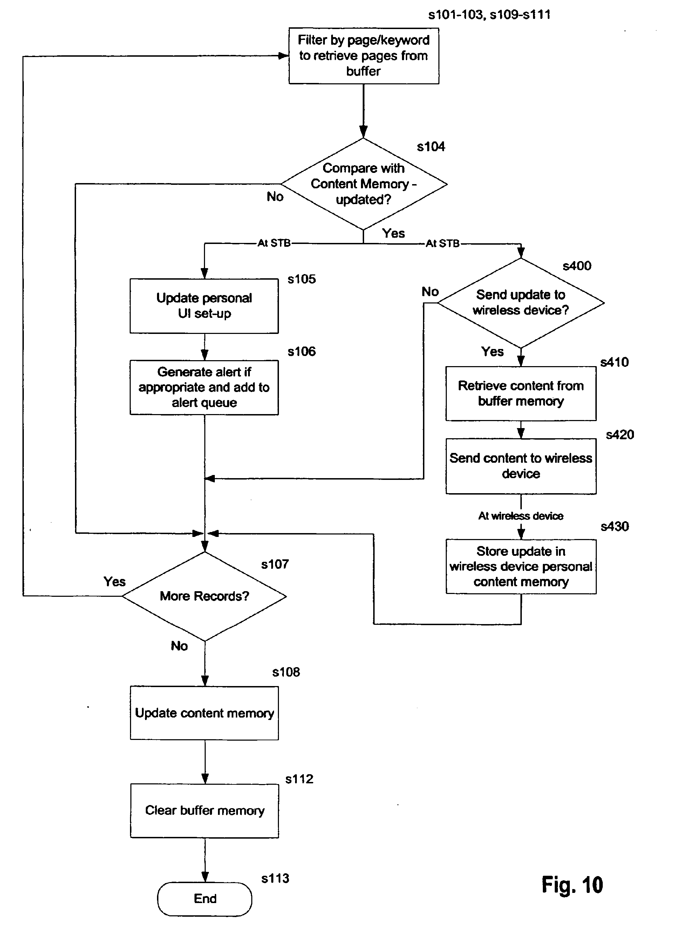

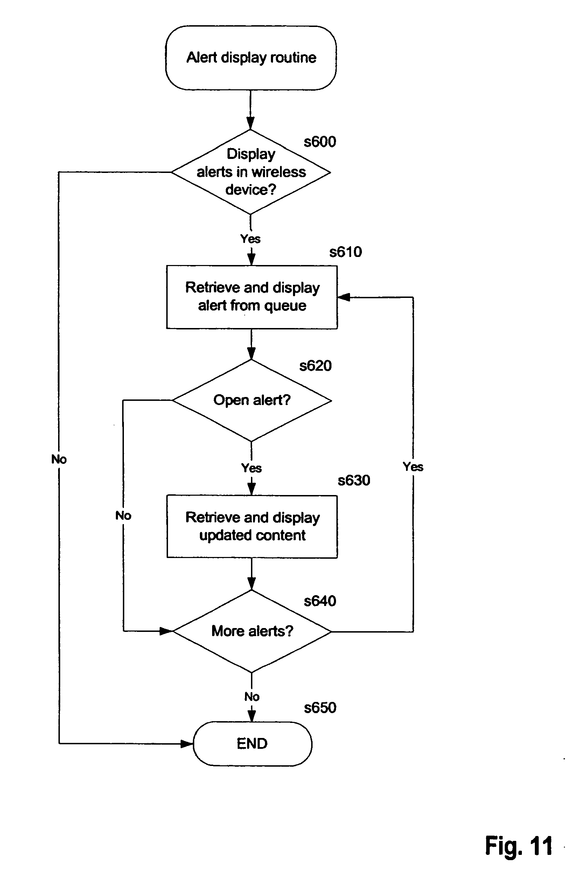

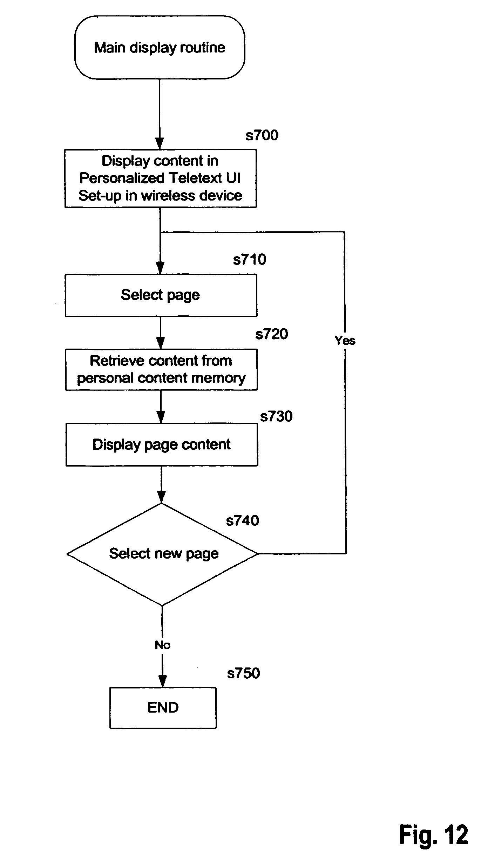

As in the embodiment described in Figure 3 above, once one or more personal profiles have been created and stored, the teletext content can be processed according to these. Steps corresponding to those shown in Figure 3 are given the same reference numerals. The first step in this process is the transmission of the text based information service by the broadcasting station 2 (step s6). The teletext content is received at the TV receiver 5 (step s7) and decoded by the teletext decoder (step s8). The content is then saved in the buffer memory 12 (step s9). During initialisation, the content memory 11 is either left empty or, in an alternative embodiment, as an initialisation step s9a, shown in dotted outline, the buffer memory 12 is copied to the content memory 11 in its entirety. The received content in the buffer memory 12 is then ready to be filtered according to the stored personal content profile(s) (step s26), as shown in more detail in Figure 10. The updated content and any associated alerts are then displayed to the user (step s27), as shown in detail in Figures 11 and 12, while further teletext content is received and processed via a receiving loop (step s28).

Figure 10 illustrates the filtering and updating procedure of step s26 in more detail. The procedure for retrieving pages from the buffer memory according to page number, keyword or a combination of the two is substantially the same as the procedure described up to step s104 in relation to Figure 4 and will not be described further in detail. Identical steps are given the same step numbers in Figure 10 as in Figure 4. As described in relation to Figure 4, the content retrieved from the buffer memory is compared (step s104) to that previously received and stored in the content memory 11. If the comparison shows that the content has been updated, because the content is different, then the user's personal UI set-up file in the personal UI memory 10 is also updated with the resulting page number (step s105), as described above in relation to Figure 4. The processor 8 also generates an alert for the update if appropriate, by checking whether the alert flag is set to 'STB' in field C5 of the user profile 40 (step s106). Each alert is added into an alert queue. The display of alerts to the user is handled by the alert display routine, which has already been explained in detail in Figure 5.

The processor 8 also determines whether the field C6 of the personal content profile 40 indicates that the update should be sent to the wireless device 16 (step s400). If so, then the page content is retrieved from the buffer memory 12 (step s410) and sent to the wireless device 16 (step s420). On receipt at the wireless device 16, the page is stored in the wireless device personal content memory 36 (step s430).

As explained in relation to Figure 4, if no page update has occurred (step s104) or the field C6 in the profile 40 indicates that the update is not to be sent to the wireless device 16, the system moves to process the next record (step s107), or if there are no records to process, updates the content memory by copying the contents of the buffer memory 12 to the content memory 11 (step s108), so allowing the user to see the full content of the teletext service in the usual way. The buffer memory may then be cleared (step s112) and the procedure ends (step s113).

The alternative embodiment explained in relation to Figure 4 relating to updating the content memory during the processing of each record, is also applicable to this Figure 10.

The generation of alerts for the wireless device 16 can be handled in a number of different ways. For example, the wireless device 16 handles the update generation, by comparing the page number and/or content of the transmitted update against the personal profile stored in the wireless device personal profile memory 34. If the corresponding entry states "Mobile", then an update is generated. Alternatively, to avoid excessive processing at the wireless device 16, for example where the update has resulted from a keyword only search, the update is sent to the wireless device 16 together with the record indicator from the personal profile 40. For example, the update resulting from the search corresponding to record R18 is sent with the indicator 'R18'. The wireless device then simply looks up the update alarm field C5 for that record, to determine whether an alert should be generated. In a yet further alternative, the update alert is generated at the teletext receiver 1 by the processor 8 determining whether the entry in field C5 for the record being processed states "Mobile". In this case, the alert is generated and sent with the update to the wireless device 16. The wireless device processor does not then need to check its personal profile memory 34, it simply receives and queues received alerts and displays them as described below.

The alert display routine at the wireless device 16 is exactly analogous to that at the teletext receiver 1 shown in Figure 5. Referring to Figure 11, first, the wireless device 16 determines whether or not the user has indicated alerts in general should occur (step s600). If alerts are enabled, the first alert in the alert queue is retrieved and displayed to the user (step s610). If the user wishes to open the alert (step s620), then the updated content is retrieved from the wireless device personal content memory 36 and displayed (step s630). Otherwise or once the content is being displayed, the device processor 33 determines whether any more alerts are queued (step s640). If so, control returns to step s610, otherwise the alert procedure terminates (step s650).

The display routine at the wireless device 16 is illustrated in Figure 12. Content is displayed according to the format in the personal UI set-up file stored in the wireless device personal UI memory 35 (step s700). For example, the available page numbers are first displayed. Navigation of the teletext content is performed by first selecting a page number (step s710). The corresponding content is retrieved from the personal content memory 36 (step s720) and displayed on the wireless device display 31 (step s730). The user then selects a new page (step s740), in which case control returns to page selection (step s710) or exits the procedure (step s750).

While the invention is described with reference to the particular examples given above, it will be apparent to the skilled person that many different implementions would be possible while still falling within the scope of the appended claims. For example, while updates to memory and to the wireless device are generally described as being done on a record-by-record basis, other updating techniques could also be used, for example such as queuing or batching updates.

Furthermore, it will be apparent that various different possibilities arise for the creation of profiles and the display of the personalised teletext information, when the teletext receiver is used in conjunction with a wireless device. For example, the set-up of the personal content profile and the UI profile could be done in the teletext receiver and sent to the wireless device. The resulting content filtered at the teletext device could then be available only in the wireless device or in the both the receiver and the wireless device. Alternatively, set-up could be done in the wireless device and the content only viewed at the receiver.

Finally, while the primary example of the invention is a teletext system, the invention is applicable to any content providing information system, which may provide text, graphic, picture, video and audio content in any format. All content provided with a television transmission, other than the transmission itself, may be processed by a system according to the invention. The supported formats may include the DVB-MHP format or a markup language format and the system may be configured to filter and present the content using these or any other formats.

## Claims

1. A method comprising:
creating a personal content profile for an information service associated with a television transmission, the information service providing content to a receiver comprising a buffer memory and a content memory, the profile comprising instructions for defining a subset of the content, the instructions comprising at least one of a keyword and metadata associated with the content of the information to be contained in the subset;
storing the personal content profile;
receiving content from the service into the buffer memory;
processing the received content according to the stored profile;
retrieving content from the buffer memory corresponding to information specified in the profile;
comparing the retrieved content with data stored in the content memory to determine whether the content has been updated; and
generating alerts to alert a user that updated content exists.

2. A method according to claim 1, wherein the step of processing the received content comprises filtering the content to extract the defined subset of the content.

3. A method according to claim 2, comprising determining that the retrieved content has been updated when it is different from corresponding content stored in the content memory.

4. A method according to claim 2, comprising determining that the retrieved content has been updated when corresponding content does not exist in the content memory.

5. A method according to any one of claims 2 to 4, further comprising storing the updated content in the content memory.

6. A method according to any one of claims 2 to 5, further comprising updating a user interface set-up file with information identifying the updated content.

7. A method according to claim 6, further comprising displaying information content at the receiver based on the identifying information stored in the user interface set-up file.

8. A method according to claim 6 or claim 7, comprising displaying the information content by retrieving information content from the content memory corresponding to the identifying information.

9. A method according to claims 2 to 8, comprising generating alerts in accordance with information stored in the personal content profile.

10. A method according to any one of claims 2 to 9, further comprising sending the updated content to a wireless device remote from the receiver and storing the updated content at the wireless device.

11. A method according to claim 10 comprising displaying the content at the wireless device based on the content stored at the wireless device.

12. A method according to any one of the preceding claims, comprising creating the profile at the receiver.

13. A method according to claim 12, further comprising sending the personal content profile to a wireless device remote from the receiver.

14. A method according to any one of the preceding claims, comprising creating the profile at a wireless device remote from the receiver, storing the profile at the wireless device and transmitting the profile to the receiver.

15. A method according to any one of claims 1 to 12, comprising storing the profile at the receiver.

16. A method according to any one of the preceding claims, comprising identifying a user prior to permitting access to a personal content profile.

17. A method according to any one of the preceding claims, wherein the information service is a teletext service.

18. A method according to any one of the preceding claims, wherein the content includes text content.

19. A method according to any one of the preceding claims, wherein the content includes picture content.

20. A method according to any one of the preceding claims, wherein the content includes audio content.

21. A method according to any one of the preceding claims, further comprising receiving content from the service in DVB-MHP format.

22. A method according to any one of claims 1 to 20, further comprising receiving content from the service in markup language format.

23. Apparatus comprising:
a buffer memory;
a content memory;
means for creating a personal content profile for an information service associated with a television transmission, the profile comprising instructions for defining a subset of content provided by the information service, the instructions comprising at least one of a keyword and metadata associated with the content of the information to be contained in the subset;
means for storing the personal content profile;
means for receiving content from the service into the buffer memory;
means for processing the received content according to the stored profile;
means for comparing the contents of the buffer memory and the content memory to determine whether the content has been updated; and
means for generating an alert to alert a user that updated content exists.

24. Apparatus according to claim 23, further comprising means configured to update the content memory with the updated content.

25. Apparatus according to claim 23 or 24, further comprising a personal user interface memory and means configured to update the personal user interface memory with information identifying the updated content.

26. Apparatus according to any one of claims 23 to 25, further comprising means for displaying personalised content, including means for retrieving content from the content memory based on the identifying information in the personal user interface memory.

27. Apparatus according to any one of claims 23 to 26, further comprising means for transmitting the personalised content to a wireless device.

28. Apparatus according to any one of claims 23 to 27, comprising a teletext receiver.

29. A wireless device comprising:
means for creating a user-specific personal content profile for an information service associated with a television transmission, the profile comprising instructions for defining a subset of content provided by the information service, the instructions comprising at least one of a keyword and metadata associated with the content of the information to be contained in the subset;
means for transmitting the profile to a receiver, the receiver being configured to receive content from the information service, to personalise the received content in accordance with the profile, and to compare the contents of a buffer memory and a content memory to determine whether the content has been updated; the wireless device further comprising:
means for receiving the personalised content from the receiver;
means for displaying the personalised content; and
means for displaying an alert to alert a user that updated content exists.

30. A wireless device according to claim 29, further comprising a personal content memory for storing the received content.

## Patentansprüche

1. Verfahren umfassend:
Erzeugen eins Profils persönlichen Inhalts für einen Informationsdienst, der mit einer Fernsehübertragung verknüpft ist, wobei der Informationsdienst einem Empfänger, der einen Pufferspeicher und einen Inhaltsspeicher umfasst, Inhalt bereitstellt, wobei das Profil Anweisungen zum Definieren eines Untersatzes des Inhalts umfasst, wobei die Anweisungen mindestens ein Schlüsselwort oder Metadaten umfassen, verknüpft mit dem Inhalt der Information, die in dem Untersatz enthalten sein soll,
Speichern des Profils persönlichen Inhalts,
Empfangen von Inhalt von dem Dienst in den Pufferspeicher,
Verarbeiten des empfangenen Inhalts gemäß dem gespeicherten Profil,
Abrufen von Inhalt aus dem Pufferspeicher, entsprechend Informationen, die in dem Profil spezifiziert sind,
Vergleichen des abgerufenen Inhalts mit Daten, die in dem Inhaltsspeicher gespeichert sind, um zu bestimmen, ob der Inhalt aktualisiert wurde, und
Erzeugen von Meldungen, um dem Benutzer zu melden, dass aktualisierter Inhalt vorhanden ist.

2. Verfahren gemäß Anspruch 1, wobei der Schritt des Verarbeitens des empfangenen Inhalts das Filtern des Inhaltes umfasst, um den definierten Untersatz des Inhalts zu extrahieren.

3. Verfahren gemäß Anspruch 2, umfassend:
Bestimmen, dass der empfangene Inhalt aktualisiert wurde, wenn er sich von dem entsprechenden Inhalt unterscheidet, der in dem Inhaltsspeicher gespeichert ist.

4. Verfahren gemäß Anspruch 2, umfassend:
Bestimmen, dass das der empfangene Inhalt aktualisiert wurde, wenn kein entsprechender Inhalt in dem Inhaltsspeicher vorhanden ist.

5. Verfahren gemäß einem der Ansprüche 2 bis 4, weiter umfassend:
Speichern des aktualisierten Inhalts in dem Inhaltsspeicher.

6. Verfahren gemäß einem der Ansprüche 2 bis 5, weiter umfassend:
aktualisieren einer Einrichtungsdatei einer Benutzerschnittstelle mit Informationen, die den aktualisierten Inhalt identifizieren.

7. Verfahren gemäß Anspruch 6, weiter umfassend:
Anzeigen von Informationsinhalt an dem Empfänger, basierend auf den Identifizierungsinformationen, die in der Einrichtungsdatei der Benutzerschnittstelle gespeichert sind.

8. Verfahren gemäß Anspruch 6 oder 7, umfassend
Anzeigen des Informationsinhalts durch Abrufen von Informationsinhalt, aus dem Inhaltsspeicher entsprechend der Identifizierungsinformation.

9. Verfahren gemäß einem der Ansprüche 2 bis 8, umfassend
Erzeugen von Meldungen gemäß Informationen die in dem Profil persönlichen Inhalts gespeichert ist.

10. Verfahren gemäß einem der Ansprüche 2 bis 9, weiter umfassend
Senden des aktualisierten Inhalts an eine, von dem Empfänger entfernte, drahtlose Vorrichtung, und
Speichern des aktualisierten Inhalts in der drahtlosen Vorrichtung.

11. Verfahren gemäß Anspruch 10, weiter umfassend:
Anzeigen des Inhalts auf der drahtlosen Vorrichtung, basierend auf einem Inhalt der auf der drahtlosen Vorrichtung gespeichert ist.

12. Verfahren gemäß einem der vorstehenden Ansprüche, umfassend:
Erzeugen des Profils in dem Empfänger.

13. Verfahren gemäß Anspruch 12, weiter umfassend:
Senden des Profils persönlichen Inhalts an eine, von dem Empfänger entfernte drahtlose Vorrichtung.

14. Verfahren gemäß einem der vorstehenden Ansprüche, weiter umfassend:
Erzeugen des Profils in einer, von dem Empfänger entfernten drahtlosen Vorrichtung, Speichern des Profils in der drahtlosen Vorrichtung, und Senden des Profils an den Empfänger.

15. Verfahren gemäß einem der Ansprüche 1 bis 12, umfassend:
Speichern des Profils in dem Empfänger.

16. Verfahren gemäß einem der vorstehenden Ansprüche, umfassend:
Identifizieren eines Benutzers, bevor Zugriff auf ein Profil persönlichen Inhalts gewährt wird.

17. Verfahren gemäß einem der vorstehenden Ansprüche, wobei:
der Informationsdienst ein Teletextdienst ist.

18. Verfahren gemäß einem der vorstehenden Ansprüche, wobei:
der Inhalt Textinhalt umfasst.

19. Verfahren gemäß einem der vorstehenden Ansprüche, wobei:
der Inhalt Bildinhalt umfasst.

20. Verfahren gemäß einem der vorstehenden Ansprüche, wobei:
der Inhalt Audioinhalt umfasst.

21. Verfahren gemäß einem der vorstehenden Ansprüche, weiter umfassend:
Empfangen von Inhalt von dem Dienst im DVB-MHP Format.

22. Verfahren gemäß einem der Ansprüche 1 bis 20, weiter umfassend:
Empfangen von Inhalt von dem Dienst in einem Markup Language-Format.

23. Vorrichtung, umfassend:
einen Pufferspeicher,
einen Inhaltsspeicher,
Mittel zum Erzeugen eines Profils persönlichen Inhalts, für einen Informationsdienst, der mit einer Fernsehübertragung verknüpft ist, wobei das Profil Anweisungen zum Definieren eines Untersatzes des Inhalts umfasst, der durch den Informationsdienst bereitgestellt wird, wobei die Anweisungen mindestens ein Schlüsselwort oder Metadaten umfassen, verknüpft mit dem Inhalt der Information, die in dem Untersatz enthalten sein soll,
Mittel zum Speichern des Profils persönlichen Inhalts,
Mittel zum Empfangen von Inhalt von dem Dienst in den Pufferspeicher,
Mittel zum Verarbeiten des empfangenen Inhalts gemäß dem gespeicherten Profil,
Mittel zum Vergleichen des Inhalts des Pufferspeichers und des Inhaltsspeichers, um zu bestimmen, ob der Inhalt aktualisiert wurde, und
Mittel zum Erzeugen einer Meldung, um dem Benutzer zu melden, dass aktualisierter Inhalt vorhanden ist.

24. Vorrichtung gemäß Anspruch 23, weiter umfassend:
Mittel, die eingerichtet sind, um den Inhalt des Inhaltsspeichers mit dem aktualisierten Inhalt zu aktualisieren.

25. Vorrichtung gemäß Anspruch 23 oder 24, weiter umfassend:
einen persönlichen Benutzerschnittstellenspeicher, und
Mittel die eingerichtet sind, den persönlichen Benutzerschnittstellenspeicher mit Informationen zu aktualisieren, die den aktualisierten Inhalt identifizieren.

26. Vorrichtung gemäß einem der Ansprüche 23 bis 25, weiter umfassend:
Mittel zum Anzeigen personalisierten Inhalts, einschließlich
Mittel zum Abrufen von Inhalt aus dem Inhaltsspeicher, basierend auf der Identifizierungsinformation in dem persönlichen Benutzerschnittstellenspeicher.

27. Vorrichtung gemäß einem der Ansprüche 23 bis 26, weiter umfassend:
Mittel zum Senden des personalisierten Inhalts an eine drahtlose Vorrichtung.

28. Vorrichtung gemäß einem der Ansprüche 23 bis 27, umfassend:
einen Teletextempfänger.

29. Drahtlose Vorrichtung, umfassend;
Mittel zum Erzeugen eines benutzerspezifischen Profils persönlichen Inhalts für einen Informationsdienst, der mit einer Fernsehübertragung verknüpft ist, wobei das Profil Anweisungen zum Definieren eines Untersatzes des Inhalts umfasst, der durch den Informationsdienst bereitgestellt wird, wobei die Anweisungen mindestens ein Schlüsselwort oder Metadaten umfassen, verknüpft mit dem Inhalt der Information, die in dem Untersatz enthalten sein soll,
Mittel zum Senden des Profils an einen Empfänger, wobei der Empfänger eingerichtet ist, Inhalt von dem Informationsdienst zu empfangen, den empfangenen Inhalt gemäß dem Profil zu personalisieren und die Inhalte eines Pufferspeichers und eines Inhaltsspeichers zu vergleichen, um zu bestimmen, ob der Inhalt aktualisiert wurde, wobei die drahtlose Vorrichtung weiter umfasst:
Mittel zum Empfangen des personalisierten Inhalts von dem Empfänger,
Mittel zum Anzeigen des personalisierten Inhalts, und
Mittel zum Anzeigen einer Meldung, um einem Benutzer zu melden, dass aktualisierter Inhalt vorhanden ist.

30. Drahtlose Vorrichtung gemäß Anspruch 29, weiter umfassend:
einen persönlichen Inhaltsspeicher, zum Speichern des empfangenen Inhalts.

## Revendications

1. Procédé comprenant les étapes consistant à :
créer un profil de contenu personnel pour un service d'informations associé à une transmission de télévision, le service d'informations fournissant le contenu à un récepteur comprenant une mémoire tampon et une mémoire de contenu, le profil comprenant des instructions destinées à définir un sous-ensemble du contenu, les instructions comprenant au moins un parmi un mot-clé et des métadonnées associé(es) au contenu des informations devant être contenues dans le sous-ensemble ;
mémoriser le profil de contenu personnel ;
recevoir le contenu provenant du service dans la mémoire tampon ;
traiter le contenu reçu en fonction du profil mémorisé ;
récupérer le contenu à partir de la mémoire tampon correspondant aux informations spécifiées dans le profil ;
comparer le contenu récupéré aux données mémorisées dans la mémoire de contenu pour déterminer si le contenu a été mis à jour ; et
générer des alertes pour avertir un utilisateur que le contenu mis à jour existe.

2. Procédé selon la revendication 1, dans lequel l'étape de traitement du contenu reçu consiste à filtrer le contenu pour extraire le sous-ensemble défini du contenu.

3. Procédé selon la revendication 2, comprenant l'étape consistant à déterminer que le contenu récupéré a été mis à jour lorsqu'il est différent du contenu correspondant mémorisé dans la mémoire de contenu.

4. Procédé selon la revendication 2, comprenant l'étape consistant à déterminer que le contenu récupéré a été mis à jour lorsque le contenu correspondant n'existe pas dans la mémoire de contenu.

5. Procédé selon l'une quelconque des revendications 2 à 4, comprenant en outre l'étape consistant à mémoriser le contenu mis à jour dans la mémoire de contenu.

6. Procédé selon l'une quelconque des revendications 2 à 5, comprenant en outre l'étape consistant à mettre à jour un fichier de montage d'interface d'utilisateur avec des informations identifiant le contenu mis à jour.

7. Procédé selon la revendication 6, comprenant en outre l'étape consistant à afficher le contenu des informations au niveau du récepteur sur la base des informations d'identification mémorisées dans le fichier de montage d'interface d'utilisateur.

8. Procédé selon la revendication 6 ou la revendication 7, comprenant l'étape consistant à afficher le contenu d'informations en récupérant le contenu d'informations de la mémoire de contenu correspondant aux informations d'identification.

9. Procédé selon les revendications 2 à 8, comprenant l'étape consistant à générer des alertes en fonction des informations mémorisées dans le profil de contenu personnel.

10. Procédé selon l'une quelconque des revendications 2 à 9, comprenant en outre l'étape consistant à envoyer le contenu mis à jour à un dispositif sans fil distant du récepteur et à mémoriser le contenu mis à jour au niveau du dispositif sans fil.

11. Procédé selon la revendication 10, comprenant l'étape consistant à afficher le contenu au niveau du dispositif sans fil sur la base du contenu mémorisé au niveau du dispositif sans fil.

12. Procédé selon l'une quelconque des revendications précédentes, comprenant l'étape consistant à créer le profil au niveau du récepteur.

13. Procédé selon la revendication 12, comprenant en outre l'étape consistant à envoyer le profil de contenu personnel à un dispositif sans fil distant du récepteur.

14. Procédé selon l'une quelconque des revendications précédentes, comprenant en outre l'étape consistant à créer le profil au niveau d'un dispositif sans fil distant du récepteur, à mémoriser le profil au niveau du dispositif sans fil et à transmettre le profil au récepteur.

15. Procède selon l'une quelconque des revendications 1 à 12, comprenant l'étape consistant à mémoriser le profil au niveau du récepteur.

16. Procédé selon l'une quelconque des revendications précédentes, comprenant l'étape consistant à identifier un utilisateur avant de permettre l'accès à un profil de contenu personnel.

17. Procédé selon l'une quelconque des revendications précédentes, dans lequel le service d'informations est un service de télétexte.

18. Procédé selon l'une quelconque des revendications précédentes, dans lequel le contenu comprend un contenu de texte.

19. Procédé selon l'une quelconque des revendications précédentes, dans lequel le contenu comprend un contenu d'image.

20. Procédé selon l'une quelconque des revendications précédentes, dans lequel le contenu comprend un contenu audio.

21. Procédé selon l'une quelconque des revendications précédentes, comprenant en outre l'étape consistant à recevoir le contenu du service dans le format DVB-MHP.

22. Procédé selon l'une quelconque des revendications 1 à 20, consistant en outre à recevoir le contenu du service dans le format de langage de balisage.

23. Appareil comprenant :
une mémoire tampon ;
une mémoire de contenu ;
des moyens pour créer un profil de contenu personnel pour un service d'informations associé à une transmission de télévision, le profil comprenant des instructions pour définir un sous-ensemble de contenu fourni par le service d'informations, les instructions comprenant au moins un parmi un mot-clé et des métadonnées associé(es) au contenu des informations devant être contenues dans le sous-ensemble ;
des moyens pour mémoriser le profil de contenu personnel ;
des moyens pour recevoir le contenu du service dans la mémoire tampon ;
des moyens pour traiter le contenu reçu en fonction du profil mémorisé ;
des moyens pour comparer les contenus de la mémoire tampon et de la mémoire de contenu pour déterminer si le contenu a été mis à jour ; et
des moyens de génération d'une alerte pour avertir un utilisateur que le contenu mis à jour existe.

24. Appareil selon la revendication 23, comprenant en outre des moyens configurés pour mettre à jour la mémoire de contenu avec le contenu mis à jour.

25. Appareil selon la revendication 23 ou 24, comprenant en outre une mémoire d'interface utilisateur personnelle et des moyens configurés pour mettre à jour la mémoire d'interface utilisateur personnelle avec les informations identifiant le contenu mis à jour.

26. Appareil selon l'une quelconque des revendications 23 à 25, comprenant en outre des moyens pour afficher le contenu personnalisé, comprenant des moyens pour récupérer le contenu de la mémoire de contenu en se basant sur les informations d'identification dans la mémoire d'interface utilisateur personnelle.

27. Appareil selon l'une quelconque des revendications 23 à 26, comprenant en outre des moyens pour transmettre le contenu personnalisé à un dispositif sans fil.

28. Appareil selon l'une quelconque des revendications 23 à 27, comprenant un récepteur de télétexte.

29. Dispositif sans fil comprenant :
des moyens pour créer un profil de contenu personnel spécifique à l'utilisateur pour un service d'informations associé à une transmission de télévision, le profil comprenant des instructions destinées à définir un sous-ensemble de contenu fourni par le service d'informations, les instructions comprenant au moins un parmi un mot-clé et des métadonnées associé(es) au contenu des informations devant être contenues dans le sous-ensemble ;
des moyens pour transmettre le profil à un récepteur, le récepteur étant configuré pour recevoir le contenu du service d'informations, pour personnaliser le contenu reçu en fonction du profil, et pour comparer les contenus d'une mémoire tampon et d'une mémoire de contenu pour déterminer si le contenu a été mis à jour ; le dispositif sans fil comprenant en outre :
des moyens pour recevoir le contenu personnalisé du récepteur ;
des moyens pour afficher le contenu personnalisé ; et
des moyens pour afficher une alerte pour avertir un utilisateur que le contenu mis à jour existe.

30. Dispositif sans fil selon la revendication 29, comprenant en outre une mémoire de contenu personnel pour mémoriser le contenu reçu.
